# EUROPÄISCHE PATENTANMELDUNG

(11) **EP 1 788 504 A1**
(43) Veröffentlichungstag der Anmeldung: **23.05.2007**
(21) Anmeldenummer: 05110826.4
(22) Anmeldetag: 16.11.2005
(51) Int. Cl.: G06F 21/00

(54) **Verfahren zur Erst-Authentifizierung eines Kunden gegenüber einem Diensteanbieter**

(71) Anmelder: SIZ-Informatik-Zentrum der Sparkassenorganisation GmbH, 53113 Bonn (DE)
(72) Erfinder: DÜNNWALD, Hans-Peter, 53271 Siegburg (DE)
(74) Vertreter: Hilleringmann, Jochen

(57) **Zusammenfassung**

Bei einem Verfahren zur Erst-Authentifizierung eines Kunden gegenüber einem Diensteanbieter, insbesondere einem Kreditinstitut, unter Nutzung einer für die qualifizierte elektronische Signatur vorgesehenen Chip-Karte im Bankenbereich, wird anhand von im freien Datenspeicher der Chip-Karte gespeicherter Information die Erst-Authentifizierung durch Kommunikation über ein nicht gesichertes Kommunikationsnetz, wie beispielsweise das Internet, zwischen dem Kunden und dem Diensteanbieter online unter von diesem erfolgter Ein schaltung eines Trust-Centers durchgeführt.

## Beschreibung

Die Erfindung betrifft ein Verfahren zur Erst-Authentifizierung eines Kunden gegenüber einem Diensteanbieter. Insbesondere geht es bei der Erfindung um ein Verfahren zur Nutzung freien Speicherplatzes eines Signaturmediums zur automatischen Initialisierung und Authentifizierung eines Benutzers in elektronischen Dienstleistungen.

In den nächsten Jahren werden sich Anwendungen für die qualifizierte elektronische Signatur am Home-PC mehr und mehr durchsetzen. Dies bedeutet, dass nahezu jeder PC über eine entsprechende Signaturanwendungskomponente verfügen wird, die ihn in die Lage versetzt, signaturrelevante Daten zu betrachten, qualifizierte elektronische Signaturen zu bilden und Zertifikatsketten zu überprüfen.

Beispielhaft soll hier das Online-Banking erwähnt werden, in dem solche Standardkomponenten zum Einsatz kommen sollen, und zwar zum Beispiel (in der S-Finanzgruppe)
- eine Signaturanwendungskomponente als z.B. Produkt "S-TRUST Sign-It", lizenziert von der Firma OpenLiMiT^{®}-Signcubes GmbH
- das Standardprodukt "Acrobat^{®} Reader" von Adobe Systems Incorporated
- eine Chip-Karte mit z.B. SECCOS Betriebsystem.

Diese im Beispiel angenommenen Standard komponenten werden zusammengefasst im Folgenden als "QSig-Infrastruktur" bezeichnet. Die Verwendung dieser QSig-Infrastruktur reicht zwar für die Abwicklung der relevanten Aufgaben zur Bildung von qualifizierten elektronischen Signaturen aus und auch das Zertifikatsmanagement lässt sich hierdurch abwickeln; die Komponenten können jedoch einen gesamten Online-Banking Kontext nicht abbilden.

Hierzu werden weitere Funktionalitäten benötigt, die
- eine Initialisierung des Kunden in Verbindung mit seinem Signaturmedium (hier der SECCOS-Karte) und seinem Zertifikat beim Diensteanbieter (hier: Kreditinstitut) ohne Benutzereingriff ermöglichen;
- durch Verwendung fortgeschrittener elektronischer Signaturen einen authentifizierten Zustand zwischen Kunde und Diensteanbieter (hier: Kreditinstitut) herstellen, in dem Informationen ausgetauscht werden können, die keine qualifizierte elektronische Signatur benötigen.

Der im Folgenden beschriebene Lösungsansatz stellt diese Funktionalitäten bereit und zwar harmonisch eingebettet in die beispielhaft gewählte QSig-Infrastruktur.

Auf Grund der rechtlichen Bedeutung der qualifizierten elektronischen Signatur muss der Kunde einige Unannehmlichkeiten auf sich nehmen, bevor er die erste Signatur mit seinem Signaturmedium (hier: SECCOS-Chipkarte) leisten kann. Er muss das Medium und eine Installations-CD persönlich bei seinem Zertifikatsaussteller (hier: dem Kreditinstitut) abholen und dann - nach Installation der relevanten Programme von CD - im Internet einen komplexen Prozess durchlaufen, um seine Zertifikate auf die Karte zu laden.

Daher ist es nicht vertretbar, dass der Kunde beim Erstkontakt mit dem Diensteanbieter (hier: dem Online-Banking Angebot seines Kreditinstituts) nochmals einen Initialisierungsprozess bewusst durchlaufen muss. Dieser wäre ebenfalls für den Kunden sehr aufwendig (Übertragen seines öffentlichen Schlüssels und seines Zertifikates; dazu Ausdrucken und Einreichen eines unterschriebenen Initialisierungsbriefes beim Diensteanbieter) und erfordert gegebenenfalls eine gewisse Wartezeit bis zur Bearbeitung (Freischaltung) beim Diensteanbieter.

Das vorliegende erfindungsgemäße Lösungskonzept beschreibt, wie dieser Prozess mit Hilfe des Signaturmediums für den Kunden transparent durchgeführt werden kann, ohne dass Benutzereingaben erfolgen müssen.

Mit der Erfindung wird ein Verfahren zur Erst-Authentifizierung eines Kunden gegenüber einem Diensteanbieter, insbesondere einem Kreditinstitut, unter Nutzung einer für die qualifizierte elektronische Signatur vorgesehenen Chip-Karte im Bankenbereich vorgeschlagen, wobei anhand von in der Chip-Karte abgelegten Schlüsseln und im freien Datenspeicher der Chip-Karte gespeicherter Information die Erst-Authentifizierung durch Kommunikation über ein nicht gesichertes Kommunikationsnetz, wie beispielsweise das Internet, zwischen dem Kunden und dem Diensteanbieter online unter von diesem erfolgter Einschaltung eines Trust-Centers erfolgt.

Mit der Erfindung vorgeschlagen wird ein Verfahren zur Nutzung des freien Speicherplatzes auf einem Signaturmedium zur automatischen Initialisierung und späteren Nutzung zur Authentifikation des Benutzers in elektronischen Dienstleistungen. Hierdurch soll ein Mischbetrieb von reiner Authentifizierung und qualifizierten Signaturen in elektronischen Dienstleistungen ermöglicht werden. Verfahrensgemäß meldet sich ein Benutzer zunächst zu einer elektronischen Dienstleistung an.

Bei der ersten Anmeldung werden zwischen dem Diensteanbieter und dem Signaturmedium Daten ausgetauscht, die in der späteren, weiteren Kommunikation zwischen Benutzer und Diensteanbieter verwendet werden. Dabei werden Daten aus dem Signaturmedium an den Diensteanbieter zur Überprüfung übermittelt. Nach korrekter Bearbeitung dieser Daten übermittelt der Diensteanbieter eigene Informationen, die die spätere weitere Kommunikation unterstützen. Diese Daten werden auf einem frei verfügbaren Speicherbereich des Signaturmediums abgelegt.

In der späteren Kommunikation zwischen dem Diensteanbieter und dem Benutzer werden diese Informationen zusammen mit den Signaturinformationen/-funktionen genutzt, um den Benutzer beim Diensteanbieter zu authentifizieren.

Nach der Erfindung wird der auf einem Signaturmedium (z.B. Chip-Karte) entsprechend frei verfügbare Speicherbereich genutzt. Beispiel hier: Signaturkarte mit Struktur "DF_NOTEPAD" als Notizbuch mit einem durch den FinTS-Standard des ZKA [2] definierten Aufbau. Bisher sind innerhalb der Struktur DF_NOTEPAD spezielle Recordbelegungen der einzelnen Datensätze "EF_NOTEPAD" in den ZKA-Standards FinTS und "DFÜ mit Kunden" festgelegt. Für den Betrieb mit der Signaturkarte zur Bildung qualifizierter elektronischer Signaturen im Internetbrowser wird durch diesen Lösungsansatz eine neue, spezielle Recordbelegung definiert, die auch beim ZKA registriert wird. Der spezielle Record entsprechend dieser Belegung wird im Folgenden als "QSig-Notepad" bezeichnet und kann auch als Struktur in den freien Speicher anderer Signaturmedien eingebracht werden.

Ziel dieses QSig-Notepads ist es unter anderem, die Abläufe während der Initialisierungsphase bedienerlos ablaufen lassen zu können.

Zusätzlich zum QSig-Notepad auf dem Signaturmedium wird auf dem Home-PC eine aktive Komponente - im Folgenden als "QSig-PlugIn" bezeichnet - benötigt, die im Zusammenspiel mit der QSig-Infrastruktur und dem QSig-Notepad die relevanten Prozesse steuern kann. Für die Funktionalität des QSig-PlugIn ist die technische Plattform (z.B. Browser-Plugin, Java-Applet oder andere Technologien) unerheblich.

Im Auslieferungsstatus des Signaturmediums steht im QSig-Notepad eine Statusinformation, die aussagt, dass das Signaturmedium noch nicht frei geschaltet ist.

Bei der ersten Anmeldung des Kunden im Online-Angebot des Diensteanbieters (Beispiel: Online-Banking eines Kreditinstituts) wird das QSig-PlugIn aktiv und überprüft den Status im QSig-Notepad. Da dieser "nicht freigeschaltet" lautet, leitet das QSig-PlugIn die entsprechenden Prozesse ein, um automatisch und ohne Benutzereingriff
- die Zertifikate inklusive der öffentlichen Schlüssel zwischen Kunde und Diensteanbieter auszutauschen,
- die Kundenkennung zu übertragen, mit der sich der Kunde im Online-Angebot des Diensteanbieters identifiziert,
- die physische Nummer des Signaturmediums an den Diensteanbieter zu senden.

Der Status jedes dieser Teilschritte wird im QSig-Notepad festgehalten. Bei erfolgreichem Abschluss der Initialisierungsphase durch Abgleich der übermittelten Informationen (z.B.: Kundenkennung, Kartennummer) und Zertifikat wird der Status auf "freigeschaltet" gesetzt und der Kunde kann nun das Online-Angebot seines Diensteanbieters frei nutzen. Dieser automatisierte Initialisierungsprozess wird dadurch möglich, da der Benutzer bereits beim Diensteanbieter bekannt ist und nur die notwendigen technischen Informationen für die spätere Nutzung in der sicheren Kommunikation ausgetauscht werden.

Das QSig-Notepad dient aber auch zum Ablegen der Zertifikate und öffentlichen Schlüssel des Diensteanbieters, damit diese bei der nächsten Anmeldung des Kunden lokal im Zugriff sind. Durch Ablage dieser Informationen auf der Signaturkarte kann der Kunde seine persönlichen Identifikationsdaten auch mit sich nehmen und überall einsetzen, wo eine QSig-Infrastruktur und ein entsprechendes QSig-PlugIn zur Verfügung stehen.

Durch Ablage der Zertifikate im QSig-Notepad kann der Kunde nach erfolgreichem Abschluss der Initialisierungsphase in eine authentifizierte Kommunikation mit dem Diensteanbieter treten und in diesem Kontext bereits alle dafür frei geschalteten Geschäftsprozesse ausführen. QSig-PlugIn und das QSig-Notepad ermöglichen die automatische Herstellung dieses Zustands am Kunden-PC.

Aus diesem authentifizierten Zustand heraus können dann beliebige Geschäftsprozesse durchgeführt werden, auch solche, die eine qualifizierte elektronische Signatur erfordern. Hierfür werden dann die Komponenten der QSig-Infrastruktur angezogen.

Der erfindungsgemäß Lösungsansatz ergänzt eine vorhandene QSig-Infrastruktur um ein QSig-Notepad auf dem Signaturmedium und eine entsprechende Prozesssteuerung, das QSig-PlugIn. Hierdurch wird eine automatische Initialisierung von Kunde, Medium und Zertifikat beim Diensteanbieter ohne Benutzereingaben ermöglicht. Zusätzlich wird bei allen folgenden Kundenanfragen automatisch ein authentisierter Zustand zwischen Kunde und Diensteanbieter hergestellt, der die Abwicklung aller Geschäfte ermöglicht, die keine qualifizierte elektronische Signatur erfordern.

Anhand der Zeichnungen wird nachfolgend ein Ausführungsbeispiel der Erfindung näher erläutert. Im einzelnen zeigen:

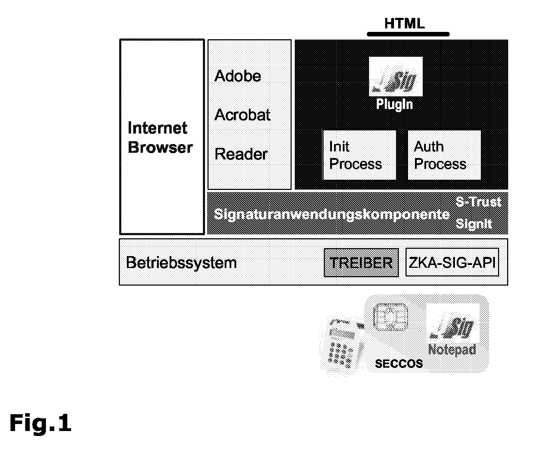

- Fig. 1: schematisch den Aufbau und die Einzelkomponenten, die auf Seiten eines Kunden zur automatischen Erst-Authentifikation und Initialisierung mit Signaturkarte für die qualifizierte elektronische Signatur erforderlich ist,

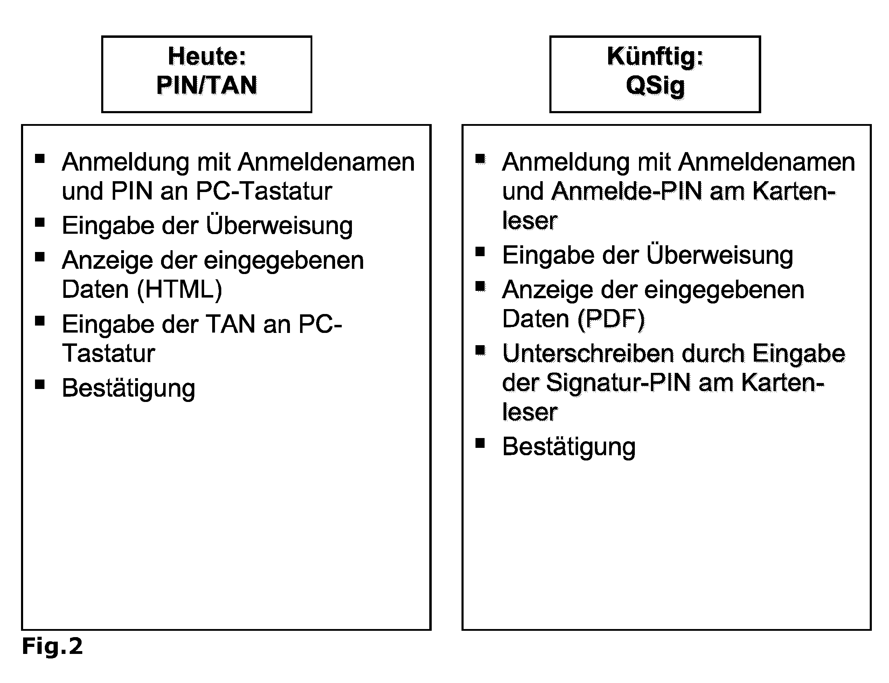

- Fig. 2: eine Gegenüberstellung des Ablaufs von Transaktionen zwischen einem Kunden und einer Bank mit PIN/TAN einerseits und mit QSig andererseits,

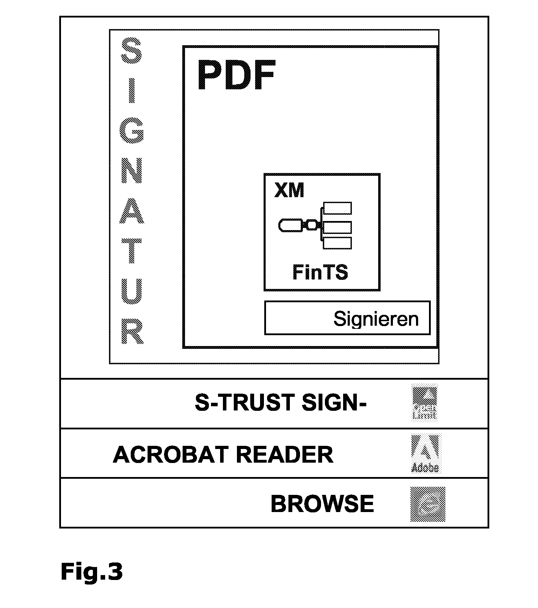

- Fig. 3: ein Bespiel für den Aufbau eines Browser-Clients zur Bildung qualifizierter elektronischer Signaturen und

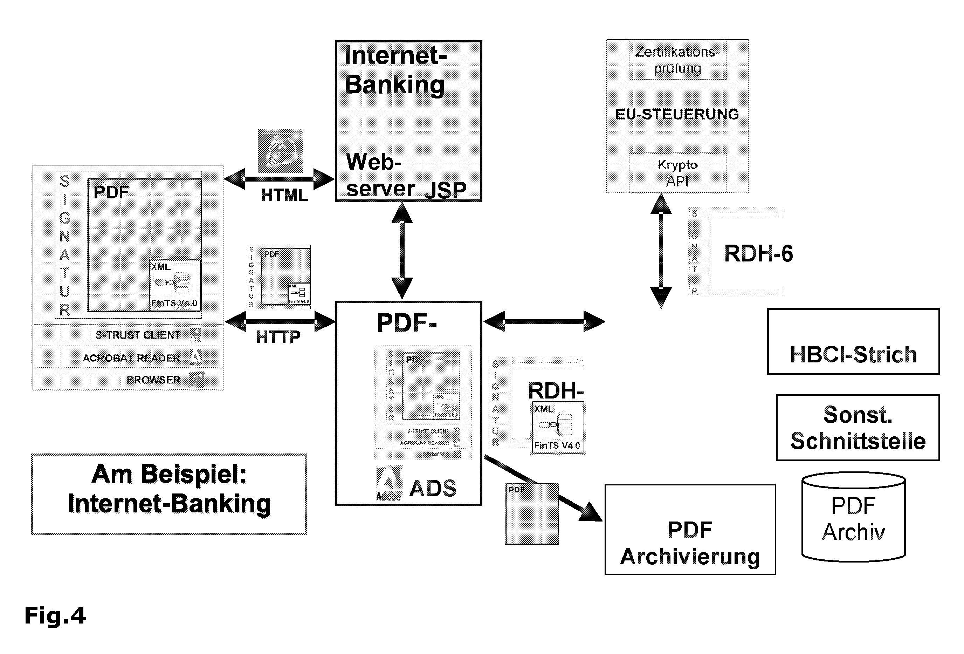

- Fig. 4: eine schematische Übersicht des konzeptionellen Ansatzes zur Bildung und Verarbeitung qualifizierter elektronischer Signaturen.

Die Erfindung ermöglicht die Nutzung der digitalen Signatur im Internet-Banking als Alternative zum PIN/TAN-Verfahren, in dem eine bequeme Erst-Authentifizierung unter Zuhilfenahme von Daten erfolgt, die im freien Speicherbereich einer Chip-Karte mit SECCOS oder ähnlichem Betriebssystem abgespeichert sind.

Die technischen Vorbereitungen für die Einführung der qualifizierten elektronischen Signatur im Internet-Banking sind mit den seit kurzem eingeführten Bankkarten, die für die qualifizierte elektronische Signatur vorbereitet sind, Trust-Centern und den übrigen Standardkomponenten für die Bankkunden verfügbar. Das erfindungsgemäße Konzept betrifft die Einbindung der digitalen Signatur in das Internet-Banking, die Nutzung der qualifizierten elektronischen Signatur, und zwar Signaturgesetz konform, sowie die weitestgehende Nutzung von Standardkomponenten.

Die Voraussetzungen für die qualifizierte elektronische Signatur sind
- Zertifikat eines zertifizierten Trust-Center (beispielsweise S-Trust),
- zertifizierte sichere Signaturerstellungseinheiten (Karte und Signaturanwendungskomponente) und
- sichere Visualisierung der zu signierenden Daten.

Der Bankkunde benötigt neben dem Zertifikat beispielsweise eine CD mit Adobe Acrobat^{®} Reader mit entsprechenden Funktionen zur Anzeige und Prüfung der Signaturen und eine zugelassene Signaturanwendungskomponente, z.B. S-TRUST Sign-it.

Die Visualisierung erfolgt zweckmäßigerweise im PDF-Format, das mit qualifizierten elektronischen Signaturen von einem Kunden durch Zusammenspiel von Adobe Acrobat^{®} und dem Zertifikat erfolgt. Erfindungsgemäß wird bei der ersten Anmeldung beispielsweise eines Bankkunden bei seiner Hausbank via elektronischer Signatur eine automatische Initialisierung im Internet-Banking-System durchgeführt.

Das Internet-Banking mit qualifizierter elektronischer Signatur lässt sich einsetzen
- für die Anmeldung eines Kunden und alle heute TAN-pflichtigen Geschäftsvorfälle,
- für neue Geschäftsvorfälle, die den Einsatz der qualifizierten elektronischen Signatur erfordern (z.B. Freistellungsauftrag, Kontoeröffnung, Abschluss eines Versicherungs- oder Leasingvertrages, etc.) und
- für die Nutzung auch in Kundenprodukten mit "Dienstleistern" wie beispielsweise DATEV, GiroPay.

Ferner ist der sogenannte Non-Cash-Service am Selbstbedienungs-Terminal ein weiterer Anwendungsfall für die qualifizierte elektronische Signatur (Voraussetzung: Chipkarten-Leser und "Client-Signaturanwendungskomponenten").

## Patentansprüche

1. Verfahren zur Erst-Authentifizierung eines Kunden gegenüber einem Diensteanbieter, insbesondere einem Kreditinstitut, unter Nutzung einer für die qualifizierte elektronische Signatur vorgesehenen Chip-Karte im Bankenbereich, wobei anhand von im freien Datenspeicher der Chip-Karte gespeicherter Information die Erst-Authentifizierung durch Kommunikation über ein nicht gesichertes Kommunikationsnetz, wie beispielsweise das Internet, zwischen dem Kunden und dem Diensteanbieter online unter von diesem erfolgter Einschaltung eines Trust-Centers erfolgt.
